# EUROPEAN PATENT SPECIFICATION

(11) **EP 2 488 721 B1**
(45) Date of publication and mention of the grant of the patent: **19.03.2014**
(21) Application number: 10768801.2
(22) Date of filing: 13.10.2010
(51) Int. Cl.: E21B 43/12, E21B 43/16, C09K 8/588, C10M 145/04, F17D 1/17

(54) **METHOD AND APPARATUS FOR MOBILISING HYDROCARBONS IN A PRODUCTION WELL**
VERFAHREN UND VORRICHTUNG ZUR VERBESSERUNG DER KOHLENWASSERSTOFFBEWEGLICHKEIT IN EINEM PRODUKTIONSBOHRLOCH
PROCÉDÉ ET DISPOSITIF POUR AMÉLIORER LA MOBILITÉ D'UN HYDROCARBURE DANS UN PUITS DE PRODUCTION

(30) Priority: 15.10.2009 GB 0918051
(43) Date of publication of application: 22.08.2012
(73) Proprietor: Oilflow Solutions Holdings Limited, Wigan Lancashire WN1 2TB (GB)
(72) Inventor: FLETCHER, Philip, Hardwick, Cambridgeshire CB3 7XG (GB); CRABTREE, Michael, John, Whitley Bay, Tyne and Wear NE25 9XE (GB); DALLISON, Steven, Calgary, Alberta T4C 1A2 (CA); PIDGEON, Patrick, Calgary, Alberta T2M 4E2 (CA)
(74) Representative: Brierley, Anthony Paul
(86) International application number: PCT/GB2010/051727
(87) International publication number: WO 2011/045603

(56) References cited:
- WO-A1-2005/040669
- WO-A1-2008/152357
- GB-A- 2 339 816

## Description

This invention relates to hydrocarbons and particularly, although not exclusively, relates to production of hydrocarbons. Preferred embodiments aim to increase the rate of production of hydrocarbons from horizontal wellbores.

An oil production arrangement may comprise a horizontal wellbore which penetrates an oil reservoir and is connected to an upwardly-extending production well via which oil is produced. Since the geothermal pressure in the reservoir may be too low to force fluid in the wellbore to the surface via the production well, an artificial lift system is employed. This may comprise a downhole pump which may be positioned at or towards the bottom of the production well.

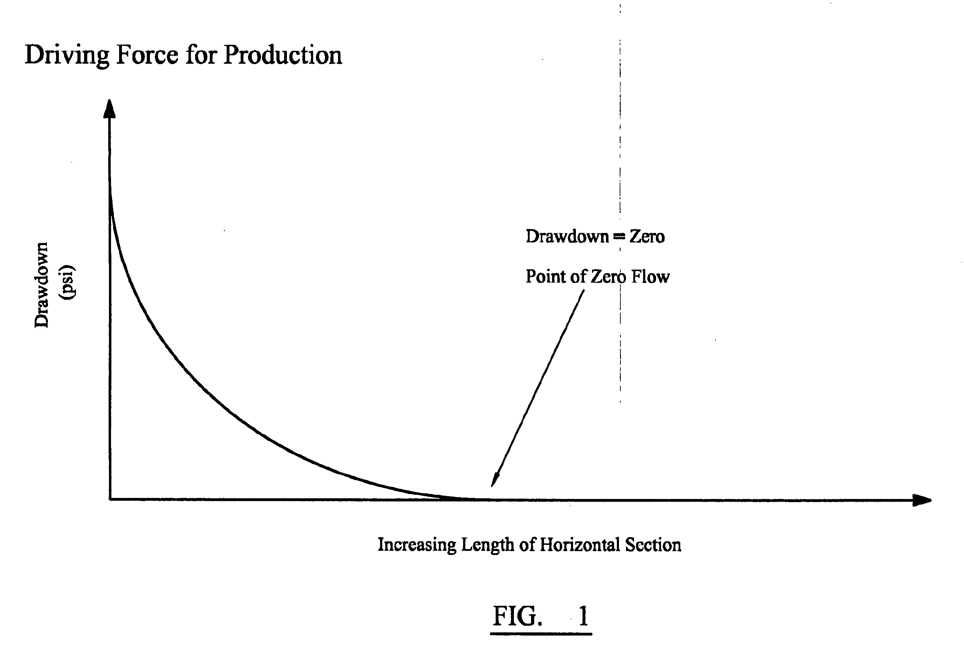

A horizontal wellbore may extend as far as 15000m (commonly it extends 1000m to 3000m) within a subterranean formation; however not all of the wellbore may be productive. In some cases, this may be a consequence of high frictional pressure losses along the producing length of the horizontal wellbore. High frictional pressures with viscous hydrocarbons represent a barrier to production. Conventionally, the frictional pressure loses in a pipeline are described implicitly using the concept of 'drawdown', where the drawdown is defined as the pressure difference between the far field pressure and the pressure at any point along the horizontal wellbore. As long as the value of the drawdown is greater than zero, hydrocarbon will flow. If the frictional pressure at any point in the wellbore is high enough, the drawdown may be reduced dramatically. As shown in Figure 1, which is a plot of drawdown vs length of a horizontal section, the drawdown decreases progressively with length until it becomes zero, at which point flow from the reservoir stops.

Some reservoirs produce large quantities of water (often referred to as "water coning") during their lifetimes, for example as the oil has been depleted. The most water may be produced at the point of maximum drawdown which is close to the heel of the wellbore. To address this problem, it is common to reduce the speed of the downhole pump, but this disadvantageously also reduces the amount of oil produced. Also, once large amounts of water have broken through, it may be very difficult to remedy, leading to increasing rates of water production and eventually a well may become incapable of producing oil economically.

It is very expensive to drill horizontal wellbores and it is, therefore, desirable to facilitate oil production for as long as possible and/or as far along a wellbore as possible in order to maximise the rate of oil production from the reservoir.

It is an object of the present invention to address the above problems.

It is an object of this present invention to reduce the frictional pressure losses in a producing horizontal section. Conceptually, this is equivalent to increasing the surface area from which a horizontal wellbore is producing.

WO2008/152357 discloses provision of a water-based formulation at or adjacent the inlet of a wellbore pump to improve the performance and efficiency of the pump.

According to a first aspect of the invention, there is provided a method of increasing production of hydrocarbons from a reservoir penetrated by a wellbore which includes an associated artificial lift means, the method comprising:
(i) inserting a conduit having an outlet into the wellbore;
(ii) introducing treatment fluid into the wellbore via the outlet of the conduit as the conduit is moved into the wellbore, said treatment fluid being arranged to mobilise hydrocarbons.

It will be appreciated that whilst we refer herein to vertical and horizontal wellbores such wellbores may not be geometrically truly vertical or horizontal. Horizontal wells often undulate and the reference herein to horizontal wells includes near horizontal and deviated wells. Similarly, references to vertical wells include wells which deviate from the true vertical.

The conduit may be inserted into the wellbore via an associated production well. Treatment fluid may be introduced into the wellbore via the outlet of the conduit as the conduit is moved into the wellbore away from the production well.

As the conduit is moved into the wellbore, the treatment fluid introduced is able to mobilise hydrocarbons, for example heavy oil, which may otherwise be substantially immovable under the conditions in the wellbore in the absence of said fluid. Effectively, production of hydrocarbons is initiated from greater lengths of the wellbore than would be possible without the intervention and/or the differential pressure profile (i.e. the difference between the pressure at the artificial lift means, for example pump inlet, and the pressure at any point along the wellbore) along the producing length of the wellbore is reduced so as to "push back" the point of zero flow of hydrocarbons deeper into the wellbore and also to increase the flow rate from zones that are already producing.

Said wellbore suitably includes a production well which suitably extends upwardly, for example substantially vertically, to a surface, wherein hydrocarbons are recovered from the production well. Said production well suitably communicates with a laterally extending, for example, horizontal, wellbore. Said artificial lift means is suitably arranged to apply a force, for example a motive force, to facilitate passage of hydrocarbons from a lateral, e.g. horizontal wellbore to the surface up the production well. The artificial lift means may be provided at or adjacent to a heel of the wellbore, which is a region at which the production well and lateral wellbore meet.

The outlet of the conduit may be moved through a distance of at least 25m, 50m, 100m, 200m, 300m, or at least 400m during its insertion into the wellbore. Thus, the length of the conduit from the surface may have the aforementioned values. Preferably, said treatment fluid is injected from said conduit continuously as it is moved through a distance of at least 25m, 50m, 100m, 200m, 300m, or at least 400m along the laterally extending wellbore. If injection was suspended during insertion, there may be a risk that a region of oil within the wellbore would not be mobilised and this could lead to a blockage of the wellbore. Furthermore, continuous injection facilitates mobilisation of static oil in a section ahead of the outlet of the conduit. This may be achieved by jetting the treatment fluid from the conduit so it "hits" the static oil. In the absence of such mobilisation, there may be a risk of buckling of the conduit if it is forced into a mass of static oil.

Preferably, at least 25m, at least 50m, at least 100m, at least 200m, at least 300m, or at least 400m of conduit is inserted into the wellbore via said production well in step (i) of the method.

Preferably, in the method, treatment fluid is flowing from the outlet of the conduit as the outlet passes the artificial lift means and passes into a laterally extending wellbore. Preferably, treatment fluid is flowing from the outlet of the conduit when the outlet is positioned at a distance of at least 10m or at least 20m from the artificial lift means, when measured upwardly from the artificial lift means. Preferably, treatment fluid is flowing from the outlet of the conduit when the outlet is positioned a distance of 10m or 5m from the top of the production well. Preferably, treatment fluid is flowing from the outlet of the conduit substantially during the entire passage of the conduit down the production well.

The conduit may be inserted into the wellbore as far as possible. Preferably, it is inserted into a non-producing region of the wellbore in order to mobilise hydrocarbons in such a region.

The rate of introduction of treatment fluid into the wellbore may be increased as the conduit passes deeper into the wellbore. This is because as the conduit moves along the horizontal section, it displaces progressively increasing volumes of new oil into the wellbore.

After insertion, the outlet of the conduit and/or the entire conduit is preferably stationary. When stationary, the rate of introduction of treatment fluid may be reduced compared to a rate during insertion of the conduit. The outlet may be positioned a distance of at least 25m, at least 50m, at least 100m, at least 200m, at least 300m or at least 400m from the artificial lift means and/or from the heel of the wellbore.

The conduit may have a wall thickness of at least 0.2cm and suitably less than 0.5cm, or 0.3cm.

The time from the start of insertion of the conduit into the wellbore until it reaches its final stationary position may be more than 2 hours, or more than 4 hours. The conduit may be inserted at a rate of at least 1m/minute up to 30m/minute.

When in the aforesaid stationary position, treatment fluid is suitably still introduced into the wellbore. Preferably, whilst the artificial lift means is being operated to remove hydrocarbons from the wellbore, the treatment fluid is introduced into the wellbore via the outlet of the conduit. Preferably, treatment fluid is continuously introduced into the wellbore whilst the artificial lift means is operating.

By "continuously", we mean that there are no significant interruptions of fluid flow which could result in oil mobility being reduced and/or risk blockages occurring in the wellbore. Said fluid is preferably introduced into the wellbore without any break in the flow of fluid over a period of at least 12 hours, 24 hours, 1 day, 2 days, 5 days or 1 week.

When in the aforesaid stationary position, the rate of introduction of treatment fluid into the wellbore may be at least 1m³/day, suitably at least 3m³/day, preferably at least 5m³/day, more preferably at least 7m³/day. The rate may be less than 200m³/day. Typically, the rate may be 3m³/day to 30m³day.

After reaching the stationary position, treatment fluid may be introduced into the wellbore over a period of at least 10 days, at least 50 days, at least 100 days, at least 1 year or at least 5 years. Treatment fluid may be introduced for as long as the reservoir is producing hydrocarbons and/or for as long as it is commercially viable to introduce treatment fluid as aforesaid to recover hydrocarbons from the wellbore.

The total volume of said treatment fluid introduced into the wellbore may be at least 250m³, is suitably at least 500m³; is preferably at least 1000m³, is more preferably at least 5000m³ and, especially, is at least 10000m³.

Over a period of 50 days, at least 50m³, at least 100m³, at least 150m³, at least 200m³, or at least 400m³ of said treatment fluid may be introduced into the wellbore.

Said artificial lift means preferably comprises a pump. Preferably, said pump is selected from a progressing cavity pump (PCP) (also known as an eccentric screw pump), a beam pump (also known as a rod pump, walking beam pump and a suction rod pump) and a centrifugal pump for example an electrical submersible pump (ESP).

A PCP is a type of pump which transfers fluid via a sequence of small discrete cavities, which move through the pump. These cavities carry the fluid. The PCP is comprised of a helix shaped metal rotor, which turns eccentrically inside a helix shaped stator. The exact shape and pitch of the helices on both rotor and stator, the number of cavities per length of pump and the size of the gaps between rotor and stator are all optimized for well conditions and pump size.

Beam pumps are simple devices containing a plunger and a pair or valves on the end of a reciprocating beam (sucker rod), which travels longitudinally in the production tubing of a well. Such a device is driven by a surface power source, commonly an electric motor or a gas or diesel engine. This turns a pair of cranks which by their action converts the rotary mechanism of the motor to the vertical reciprocating motion of the beam. The result is a characteristic nodding motion. The downhole plunger and valve assembly convert the reciprocating motion to vertical fluid movement. Essentially, during the downstroke of the beam, the plunger is filled with fluid and during the upstroke of the beam the fluid is delivered to the front surface of the pump.

Preferred pumps may, in some cases, be PCPs or beam pumps. However, in some cases, the invention may advantageously be applied to situations wherein ESPs are associated with wellbores. ESPs are generally relatively cheap but are not generally usable to transport heavy oils. However use of the present invention may enable such pumps to be used, even to transport relatively heavy oils to the surface.

The method of the first aspect suitably includes the step of operating the wellbore pump to draw fluid through the wellbore, suitably to the surface.

A wellbore as described may have a diameter in the range 4 to 10 inches (10-25cm).

Said conduit preferably comprises a pipe. Said pipe may have an external diameter of at least 1.5 cm, and suitably of 12 cm or less. Preferably, the external diameter is at least 3 cm and suitably is 4.5 cm or less. The external diameter is preferably substantially constant along 80%, 90% or about 100% of the length of the pipe.

The internal diameter of the pipe may be in the range of 2 to 5 cm.

Said pipe is suitably constructed to withstand the pressures within the wellbores and being left within the wellbore for an extended period of time. Said pipe may have a minimum monotonic yield strength of 60, 70, 80, 90, 100, 110 or 120 ksi.

Said pipe may comprise coiled tubing or jointed tubing. Coiled tubing may have a length of at least 100m or at least 500m. Jointed tubing may comprise lengths of at least 5m which are jointed to one another to provide long pipes. Pipes up to 10,000m may be used in some situations.

Step (i) of the method may comprise driving the pipe into the wellbore using a drive means.

In the method, the ratio of the volume of reservoir fluid (i.e. fluid naturally present in the reservoir) to the volume of treatment fluid may be in the range of 60:40 (reservoir fluid: treatment fluid) to 95:5, preferably in the range of 70:30 (reservoir fluid: treatment fluid) to 95:5. The aforesaid ratios suitably apply 30 days after the start of the treatment of the first aspect when averaged over a 5-day period (i.e. averaging days 30-35 after the start of the treatment).

Preferably, in the method, the rate of recovery of liquid hydrocarbons from the wellbore after contact with said treatment fluid is greater than the rate of recovery of liquid hydrocarbons before contact with said treatment fluid. Preferably, the rate of recovery is at least 10% greater.

Preferably, the method comprises causing or allowing liquid hydrocarbons to separate from other components (e.g. water) of the fluid collected at the surface of the wellbore.

Said treatment fluid suitably has a viscosity at 25°C and 100s-1 of greater than 0.98cP, suitably greater than 1cP, preferably greater than 1.2cP, especially greater than 1.5cP. Said treatment fluid preferably has a viscosity under the conditions described of not greater than 10cP, preferably of 5cP or less, more preferably of 2cP or less.

Said treatment fluid preferably comprises a first polymeric material which includes -O- moieties pendent from a polymeric backbone, wherein the first polymeric material is optionally cross-linked.

Said optionally cross-linked first polymeric material is preferably soluble in water at 25°C. Preferably, said treatment fluid comprises a solution of said optionally cross-linked first polymeric material.

Said polymeric backbone of said first polymeric material preferably includes carbon atoms. Said carbon atoms are preferably part of -CH₂- moieties. Preferably, a repeat unit of said polymeric backbone includes carbon to carbon bonds, preferably C-C single bonds. Preferably, said first polymeric material includes a repeat unit which includes a -CH₂- moiety. Preferably, said polymeric backbone does not include any -0- moieties, for example -C-O- moieties such as are found in an alkyleneoxy polymer, such as polyethyleneglycol. Said polymeric backbone is preferably not defined by an aromatic moiety such as a phenyl moiety such as is found in polyethersulphones. Said polymeric backbone preferably does not include any -S- moieties. Said polymeric backbone preferably does not include any nitrogen atoms. Said polymeric backbone preferably consists essentially of carbon atoms, preferably in the form of C-C single bonds.

Said -O- moieties are preferably directly bonded to the polymeric backbone.

Said optionally cross-linked first polymeric material preferably includes, on average, at least 10, more preferably at least 50, -0- moieties pendent from the polymeric backbone thereof. Said -O- moieties are preferably a part of a repeat unit of said first polymeric material.

Preferably, said -0- moieties are directly bonded to a carbon atom in said polymeric backbone of said first polymeric material, suitably so that said first polymeric material includes a moiety (which is preferably part of a repeat unit) of formula: 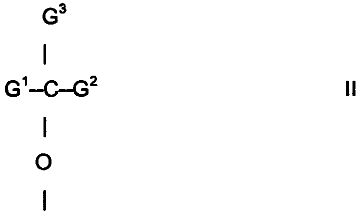 where G¹ and G² are other parts of the polymeric backbone and G³ is another moiety pendent from the polymeric backbone. Preferably, G³ represents a hydrogen atom.

Preferably, said first polymeric material includes a moiety

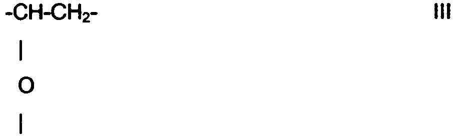

Said moiety III is preferably part of a repeat unit. Said moiety III may be part of a copolymer which includes a repeat unit which includes a moiety of a different type compared to moiety III. Suitably, at least 60 mole%, preferably at least 80 mole%, more preferably at least 90 mole% of said first polymeric material comprises repeat units which comprise (preferably consist of) moieties **III.** Preferably, said first polymeric material consists essentially of repeat units which comprise (preferably consist of) moieties III.

Suitably, 60 mole%, preferably 80 mole%, more preferably 90 mole%, especially substantially all of said first polymeric material comprises vinyl moieties.

Preferably, the free bond to the oxygen atom in the -O- moiety pendent from the polymeric backbone of said first polymeric material (and preferably also in moieties II and III) is bonded to a group R¹⁰ (so that the moiety pendent from the polymeric backbone of said first polymeric material is of formula -O-R¹⁰). Preferably group R¹⁰ comprises fewer than 10, more preferably fewer than 5, especially 3 or fewer carbon atoms. It preferably only includes atoms selected from carbon, hydrogen and oxygen atoms. R¹⁰ is preferably selected from a hydrogen atom and an alkylcarbonyl, especially a methylcarbonyl group. Preferably moiety -O-R¹⁰ in said first polymeric material is an hydroxyl or acetate group.

Said first polymeric material may include a plurality, preferably a multiplicity, of functional groups (which incorporate the -0- moieties described) suitably selected from hydroxyl and acetate groups. Said polymeric material preferably includes at least some groups wherein R¹⁰ represents an hydroxyl group. Suitably, at least 30%, preferably at least 50%, especially at least 80% of groups R¹⁰ are hydroxyl groups. Said first polymeric material preferably includes a multiplicity of hydroxyl groups pendent from said polymeric backbone; and also includes a multiplicity of acetate groups pendent from the polymeric backbone.

The ratio of the number of acetate groups to the number of hydroxyl groups in said first polymeric material is suitably in the range 0 to 3, is preferably in the range 0.5 to 1, is more preferably in the range 0.06 to 0.3, is especially in the range 0.06 to 0.25.

Preferably, substantially each free bond to the oxygen atoms in -0- moieties pendent from the polymeric backbone in said first polymeric material, except for any free bonds which are involved in optionally cross-linking the first polymeric material, is of formula -O-R¹⁰ wherein each group -OR¹⁰ is selected from hydroxyl and acetate.

Preferably, said first polymeric material includes a vinyl alcohol moiety, especially a vinyl alcohol moiety which repeats along the backbone of the polymeric material. Said first polymeric material preferably includes a vinyl acetate moiety, especially a vinylacetate moiety which repeats along the backbone of the polymeric material.

Said polymeric material suitably comprises at least 50 mole%, preferably at least 60 mole%, more preferably at least 70 mole%, especially at least 80 mole% of vinylalcohol repeat units. It may comprise less than 99 mole%, suitably less than 95 mole %, preferably 92 mole% or less of vinylalcohol repeat units. Said polymeric material suitably comprises 60 to 99 mole%, preferably 80 to 95 mole%, more preferably 85 to 95 mole%, especially 80 to 91 mole% of vinylalcohol repeat units.

Said first polymeric material preferably includes vinylacetate repeat units. It may include at least 2 mole%, preferably at least 5 mole%, more preferably at least 7 mole%, especially at least 9 mole% of vinylacetate repeat units. It may comprise 30 mole% or less, or 20 mole% or less of vinylacetate repeat units. Said polymeric material preferably comprises 9 to 20 mole% of vinylacetate repeat units.

Said first polymeric material is preferably not cross-linked.

Suitably, the sum of the mole% of vinylalcohol and vinylacetate repeat units in said first polymeric material is at least 80 mole%, preferably at least 90 mole%, more preferably at least 95 mole%, especially at least 99 mole%.

Said first polymeric material preferably comprises 70-95 mole%, more preferably 80 to 95 mole%, especially 85 to 91 mole% hydrolysed polyvinylalcohol.

The weight average molecular weight (Mw) of said first polymeric material may be less than 500,000, suitably less than 300,000, preferably less than 200,000, more preferably less than 100,000. In an especially preferred embodiment, the weight average molecular weight may be in the range 5,000 to 50,000. The weight average molecular weight of said polymeric material (Mw) may be less than 40,000, suitably is less than 30,000, preferably is less than 25,000. The Mw may be at least 5,000, preferably at least 10,000. The Mw is preferably in the range 5,000 to 25,000, more preferably in the range 10,000 to 25,000.

The viscosity of a 4wt% aqueous solution of the first polymeric material at 20°C is preferably in the range 1.5-7cP.

The viscosity of a said 4wt% aqueous solution of the first polymeric material at 20°C may be at least 2.0cP, preferably at least 2.5cP. The viscosity may be less than 6cP, preferably less than 5cP, more preferably less than 4cP. The viscosity is preferably in the range 2 to 4cP. The number average molecular weight (Mₙ) of said first polymeric material may be at least 5,000, preferably at least 10,000, more preferably at least 13,000. Mₙ may be less than 40,000, preferably less than 30,000, more preferably less than 25,000. The Mₙ is preferably in the range 5,000 to 25,000.

Weight average molecular weight may be measured by light scattering, small angle neutron scattering, x-ray scattering or sedimentation velocity. The viscosity of the specified aqueous solution of the first polymeric material may be assessed by Japanese Standards Association (JSA) JIS K6726 using a Type B viscometer. Alternatively, viscosity may be measured using other standard methods. For example, any laboratory rotational viscometer may be used such as an Anton Paar MCR300.

Whilst it is preferred for said first polymeric material not to be cross-linked (ie to comprise first polymeric material which is not cross-linked), when said first polymeric material is cross-linked, it may comprise a polymeric material formed by reaction of a said first polymeric material and a second material which includes a functional group which is able to react in the presence of said first polymeric material to cross-link said first polymeric material and form a third polymeric material.

Formation of said third polymeric material from said first polymeric material and second material may involve a condensation reaction. Formation of said third polymeric material may involve an acid catalysed reaction.

Said first polymeric material and second material may include functional groups which are arranged to react, for example to undergo a condensation reaction, thereby to form said third polymeric material. Said first polymeric material and second material may include functional groups which are arranged to react for example to undergo an acid catalysed reaction thereby to form said third polymeric material.

Said second material may be an aldehyde, carboxylic acid, urea, acroleine, isocyanate, vinyl sulphate or vinyl chloride of a diacid or include any functional group capable of condensing with one or more groups on said first polymeric material. Examples of the aforementioned include formaldehyde, acetaldehyde, glyoxal and glutaraldehyde, as well as maleic acid, oxalic acid, dimethylurea, polyacroleines, diisocyanates, divinyl sulphate and the chlorides of diacids.

Said second material may be an aldehyde containing or generating compound. Said second material may be an aldehyde containing compound and may include a plurality of aldehyde moieties. Said aldehyde containing compound may be of formula IV as described in W098/12239 the content of which is incorporated herein for WO2006/106300.

Said treatment fluid is preferably aqueous. It suitably comprises at least 80wt%, preferably at least 90wt%, more preferably at least 95wt%, especially at least 98wt% water. It may include 99.5wt% or less of water.

Said treatment fluid suitably includes at least 0.1wt%, preferably at least 0.2wt%, more preferably at least 0.3wt% of said first polymeric material. It may include less than 1.5wt% preferably less than 1wt%, more preferably less than 0.8wt% of said first polymeric material.

Said treatment fluid suitably includes 95 to 99wt% of water, 0.1 to 1wt% of said first polymeric material and 0 to 3wt% of other additives, such as biocides or corrosion inhibitors. The amount of other additives may be less than 2.5 wt%, suitably less than 2.0wt%, preferably less than 1wt%. Preferably, said treatment fluid includes 98 to 99.9wt% of water, 0.1 to 1wt% of said first polymeric material and 0 to 1wt% of other additives.

In a preferred embodiment, said treatment fluid comprises 98 to 99.9wt% of water, 0.1 to 1wt% of said first polymeric material which is suitably not cross-linked and 0 to 1wt% of other additives and said first polymeric material comprises 85 to 91 mole% hydrolyzed polyvinylalcohol having a Mw in the range 5,000 to 30,000 and/or wherein the viscosity of a 4wt% aqueous solution of the polymeric material at 20°C, suitably measured as described herein, is in the range 1.5 to 6cP.

In an especially preferred embodiment, said treatment fluid comprises 98 to 99.8wt% of water, 0.2 to 1wt% of said polymeric material which is not cross-linked and 0 to 1wt% of other additives and said first polymeric material comprises 85 to 91mole% hydrolyzed polyvinylalcohol having a Mw in the range 10,000 to 30,000 and/or wherein the viscosity of a 4wt% aqueous solution of the polymeric material at 20°C, suitably measured as described herein, is in the range 2 to 4cP.

Said treatment formulation preferably include less than 0.5wt%, more preferably less than 0.4wt%, especially less than 0.2wt% of other additives in the form of surfactants.

Said hydrocarbons preferably comprise oil. Said oil is preferably a crude oil which term in the context of the present specification includes tar (heavy crude oil), obtained from tar sands, and bitumen. The oil may have an API gravity of less than 30°, suitably less than 25°, preferably less than 20°. In some cases, the API gravity may be less than 15° or even less than 10°. In a preferred embodiment hydrocarbons may have a specific gravity in the range 0.92-1.03 and the API gravity is in the range 6 to 22. The viscosity may be in the range 2000cp to 500,000cp at the temperature of the artificial lift means, for example down hole pump.

Said treatment fluid may be at a temperature of at least ambient temperature immediately prior to introduction into the conduit.

Water for use in the treatment fluid may be derived from any convenient source. It may be potable water, surface water, sea water, aquifer water, deionised production water and filtered water derived from any of the aforementioned sources. Said water is preferably a brine, for example sea water or is derived from a brine such as sea water. The references to the amounts of water herein suitably refer to water inclusive of its components, e.g. naturally occurring components such as found in sea water. Water may include up to 6wt% dissolved salts but suitably includes less than 4wt%, 2wt% or 1wt% or less of dissolved salts which are naturally occurring in the water.

The method preferably comprises collecting hydrocarbons which have been contacted with said treatment fluid. The material collected suitably comprises hydrocarbons and treatment fluid. The material collected suitably includes greater than 5wt%, preferably greater than 10wt%, more preferably greater than 20wt%, especially greater than 30wt% of hydrocarbons, for example oil. The material collected may comprise less than 1wt%, or even less than 0.75wt% of said first polymeric material. The material collected may comprise greater than 30wt%, greater than 40wt% or greater than 50wt% of water. The method may include the step of causing hydrocarbons, for example oil, to separate from at least part of the treatment fluid after collection. Separation may involve allowing an oil phase and water phase to settle from a mixture initially collected.

According to a second aspect of the invention, there is provided a method of increasing production of hydrocarbons (e.g. oil), from a hydrocarbons (e.g. oil) reservoir penetrated by a wellbore which includes an associated artificial lift means, wherein a conduit extends from a production well along the wellbore, the method comprising:
(a) operating said artificial lift means to withdraw fluid from the wellbore and cause it to move to the production well;
(b) continuously introducing treatment fluid into the wellbore via said conduit when said artificial lift means is operating, wherein said treatment fluid is arranged to mobilise said hydrocarbons (e.g. oil).

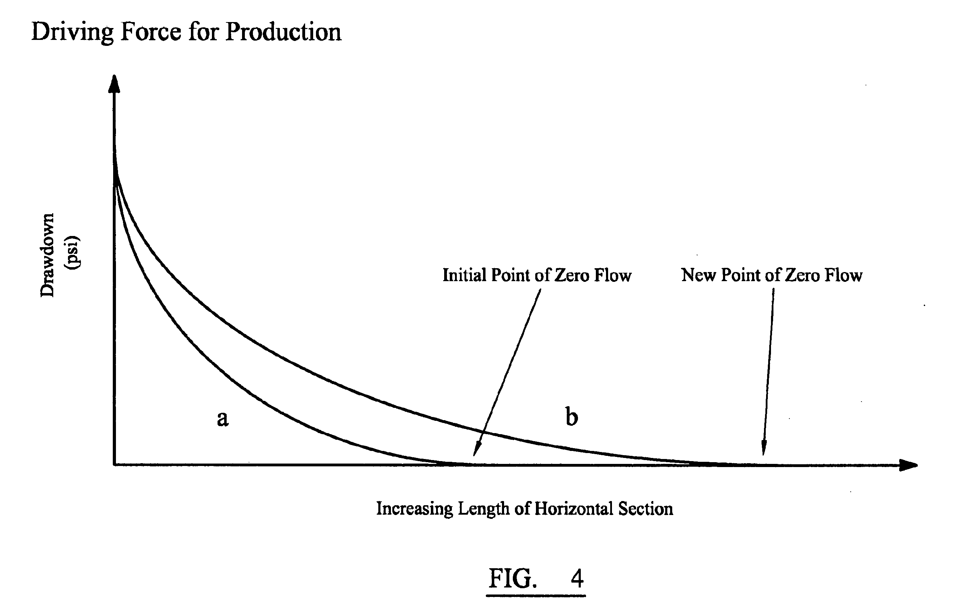

In one embodiment, the method of increasing oil production may be achieved by reducing water production (water coning) and/or by delaying the onset of watering out of the well. By use of the inventions of the first and/or second aspects, the drawdown profile (shown in figures 1 and 4 hereinafter) may be adjusted so it is lower at the heel but the area under the drawdown curve (e.g. of figures 1 and 4) may be greater compared to a situation wherein aspects of the present invention are not used. Thus, in one embodiment utilising the first and second aspects of the invention, the downhole pump speed may be reduced, thereby reducing susceptibility to water production, for example at the heel. Nonetheless, oil is produced further along the horizontal wellbore meaning that overall oil produced is increased and water production reduced compared to the situation in the absence of use of the present invention.

Any feature of the method of the first aspect may be used in the method of the second aspect mutatis mutandis.

According to a third aspect of the-invention, there is provided an assembly comprising:
(A) a conduit having an outlet for treatment fluid, said conduit extending from a surface into a wellbore and being arranged to deliver treatment fluid into the wellbore;
(B) an artificial lift means associated with the wellbore for facilitating removal of fluid from the wellbore;
(C) a receptacle at the surface, said receptacle containing treatment fluid;
(D) treatment fluid flowing within the conduit.

The assembly of the third aspect may be for carrying out the methods of the first and/or second aspects.

Any feature described in the invention of the first aspect may be applied to the invention of the third aspect. For example details on the size of the conduit and/or its extent of penetration into the wellbore may be applied to the invention of the third aspect as may detail on the treatment fluid.

Specific embodiments of the invention will now be described, by way of example, with reference to the accompanying drawings, in which:
Figure 1 is a graph of drawdown v. length of a horizontal wellbore;
Figure 2 is a schematic representation of part of an oil production arrangement;
Figure 3 (a and b) are schematic representations illustrating the hydrocarbon flow rate with or without treatment with a fluid as described herein;
Figure 4 (a and b) is a graph of drawdown v. length of a horizontal wellbore with and without treatment with a fluid as described herein;
Figure 5 is a schematic representation of part of a modified oil production arrangement.

In the figures, the same of similar parts are annotated with the same reference numerals.

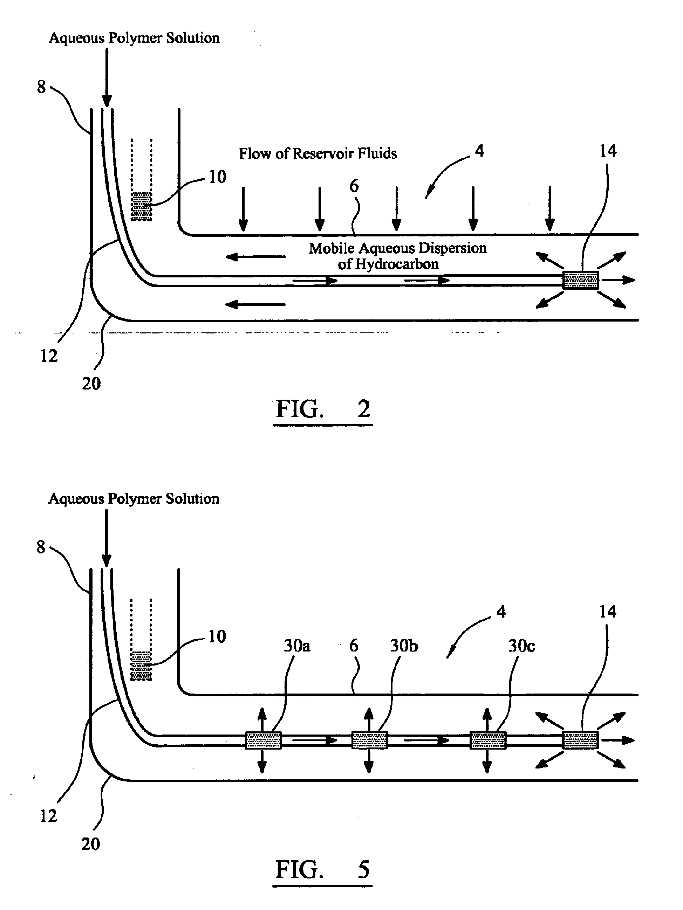

Referring to Figure 2, an oil production arrangement comprises an oil reservoir 4, a horizontal wellbore 6 and a vertically extending production well 8. A pump 10 is positioned at the bottom of the production well 8 for pumping fluid along the horizontal wellbore and up the production well for recovery.

Tubing 12 having a fluid delivery device 14 at its end is introduced into the production well and moved downwards past the pump 10 and along the horizontal wellbore as far as possible for example close to the toe (not shown) of the wellbore or at least beyond a point in the wellbore at which it is assessed that the hydrocarbon flow has terminated because of a balance between reservoir pressure and wellbore differential pressure being achieved.

From the start (or for example as soon as the tubing 12 enters the vertical annular gap between the product well and production tube) of introduction of tubing 12 into the production well and continuously thereafter a fluid is pumped through the tubing so it passes into the production well 8 as the tubing passes therethrough and into the horizontal wellbore 6 as the tubing passes therethrough. The fluid is still pumped into the horizontal wellbore after the tubing has reached its final position deep in the wellbore.

The fluid is selected to enhance the mobility of oil and therefore increase the oil production rate.

Features of the invention will be described in more detail below.

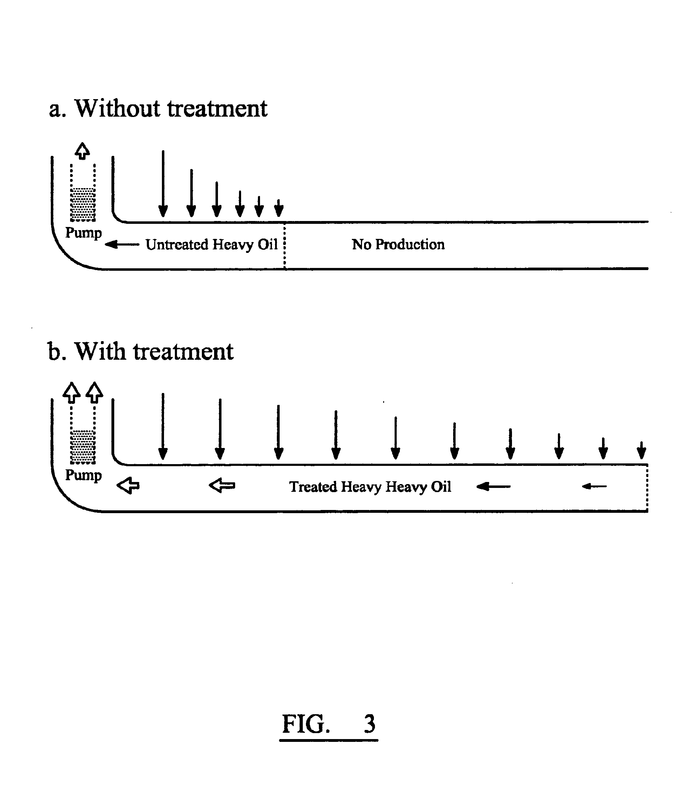

Essentially, the increase in the oil production rate is achieved by initiating production from greater lengths of the wellbore than would be possible without the intervention. It may be thought of as reducing the frictional pressure losses in a producing horizontal section and/or increasing in the total surface area through which reservoir fluid can flow. Figure 3 (a and b) illustrate the modification of a hydrocarbon flow rate with and without the treatment. The implication is that previously non-producing sections of the horizontal wellbore 6 can be made to produce. This is an increase in the drainage radius of the producing wellbore and may be interpreted as an increase in the reserves of the reservoir.

The intervention may also be considered as a means to modify the drawdown profile along the producing length of the horizontal wellbore. Figure 4a is as described above for Figure 1. Figure 4b illustrates how treatment with the fluid increases the drawdown at all points along the horizontal wellbore so that the point of zero flow is "pushed back" along the horizontal wellbore. Thus, flow closer to the toe of the well can be enhanced by reducing wellbore frictional losses.

The treatment fluid is selected to enhance mobility of oil, it comprises an aqueous solution of a water soluble polymer which, when blended with oil, produces a mobile dispersion of oil droplets in a continuous aqueous phase. In such a dispersion, oil droplets are separated and encapsulated by a molecular layer of the polymer, leading to the steric hindrance of coalescence. The consequence of retaining individual oil droplets in suspension is that when flowing, the oil droplets 'slip' and 'roll' over each other. Similarly, suspended oil droplets may 'slip' along metal surfaces. Oil droplets are therefore mobilized in environments where they would otherwise be immobile, and the resistance to flow is substantially less than it would be for untreated oil. This type of behaviour is often termed apparent viscosity reduction.

The water soluble polymer suitably comprises a polyvinylalcohol which is suitably a 87-89 mole% hydrolysed polyvinylalcohol, wherein the viscosity of a 4 wt% aqueous solution at 20°C is 3-3.7 cP which corresponds to a weight average molecular weight of about 20,000 (referred to hereinafter as "polyvinylalcohol Grade A").

The tubing 12 may have an external diameter in the range 0.7-4.5 inches (1.8 to 11.5 cm) with 1.25-1.75 inches (3.2 to 4.4 cm) being preferred. It will be appreciated that, during placement of the tubing, it will be delivered into part of the horizontal wellbore which is full of immobile reservoir fluid and, accordingly, the tubing should be strong enough to be placed without collapsing or buckling under the stress of placement Once placed the tubing 12 is a permanent fixture of the wellbore.

The tubing 12 may comprise coiled tubing or jointed tubing. The term 'coiled tubing' refers to a long section of small diameter pipe, rolled up on a spool and straightened prior to pushing into a wellbore. Depending on the coiled tubing diameter and the spool size, coiled tubing can range from 2,000 ft (609.6m) to 20,000 ft (6096.0m) or greater.

Coiled tubing may be made from a number of materials including mild steel, alloys or, less commonly, plastics. It is fabricated in a variety of material grades, characterized by minimum monotonic yield strengths of 60, 70, 80, 90, 100, 110 and 120 ksi.

A coiled tubing unit may be used to introduce the coiled tubing into the wellbore. This includes an injector head to push the tubing into the wellbore.

Jointed tubing consists of individual lengths of pipe, threaded together to make a single length of the pipe to provide a conduit. Tubing joints are generally around 30 ft [9 m] long with a threaded connection on each end. The specification of the tubing material, geometry of the tubing, and design of the connection thread are selected to suit the reservoir fluid and wellbore conditions.

Jointed tubing is more rigid than coiled tubing and may be preferred when it is necessary to run the tubing far down the horizontal section against the resistance of resident viscous oil.

The fluid delivery device 12 which may also be referred to as a bottom hole assembly may comprise a jetting nozzle designed to inject the fluid in a specified direction and at a specified velocity.

The following example illustrates treatment of a horizontal well.

### Example 1 - Treatment of horizontal well in Northern Alberta

A horizontal well having the following characteristics was selected:

| | |
|---|---|
| Reservoir type | Sandstone |
| Location | Northern Alberta |
| Subsurface pump (i.e. pump 10) | Progressing cavity pump |
| Total length of horizontal section: | 1000metres |
| Wellbore type: | 5.7inch (0.1448m) diameter slotted liner |
| Viscosity of dry oil at 15°C | 280,000 cP to 350,000 |

A 0.5 wt% solution of polyvinylalcohol Grade A was prepared by dissolution of the powdered polyvinylalcohol in water at an elevated temperature with stirring to produce a concentrate which was then diluted with fresh water to produce the target concentration.

1.25 inch (3.18 cm) internal diameter coiled tubing was selected and provided with a device 12 which was a bull-nosed nozzle with forward and rear facing jets.

Prior to introduction of the coiled tubing, baseline data was collected using direct injection for 73 days of the 0.5 wt% polyvinylalcohol solution down the annulus of the production well 8 as described in WO2008152357.

After collection of the baseline data, the 0.5 wt% polyvinylalcohol solution was flowed into the coiled tubing and then introduced into production well 8, with solution flowing via device 12 into the well. The tubing was then inserted, with the solution being continuously pumped until the device 12 was spaced a distance of 550m from the heel 20 of the well. It took approximately three hours for the tubing to reach this position. The method involved modifying the injection rate of solution (referred to below as the "Aqueous Fluid Rate") by trial and error to achieve a stable oil production rate within the upper limit of the torque of pump 10.

Performance data is presented in Table 1, where it is noted that the coiled tubing intervention lead to the oil production rate increasing from 10m³/day to 18.2m³/day as compared to the baseline. Additional benefits included the ability to increase the subsurface pump speed from 140 RPM to 200 RPM whilst increasing the pump efficiency from 58% to 67%.

**Table 1: Results:**

| Performance Indicator | Units | Baseline | Coiled Tubing Injection |
|---|---|---|---|
| Oil Rate | m³/day | 10 | 18.2 |
| Aqueous Fluid Rate | m³/day | 7.6 | 9.6 |
| Pump Speed | RPM | 140 | 200 |
| Pump Efficiency | % | 58 | 67 |

As an alternative to the arrangement of Figure 2 which includes a single fluid delivery device 14, the arrangement of Figure 5 includes a device 14 at the downhole end of tubing 12 and additional injection devices 30a, 30b and 30c at strategic positions along tubing 12. Devices 30a, 30b and 30c may be designed to treat oil from specifically identified producing zones. The devices may be activated electrically, mechanically or hydraulically.

The device 14 and devices 30 (if provided) may be selected and/or operated to minimize damage to the wellbore lining through abrasion or any cutting action of the injected fluid. Also jets which face the heel of the wellbore may facilitate movement of the oil in that direction.

The tubing 12, or some similar device for delivering chemicals to the wellbore, may be incorporated in the initial completion of the well before beginning production. This obviates the need to 'retro-fit' tubing, as described above.

Means may be provided to facilitate centralisation of tubing 12 and appropriate positioning of device 14 and/or devices 30, in order to minimise restrictions to flow. Such centralizers may be controlled electrically or mechanically

A 'downhole tractor' unit may be used in order to pull the tubing down the horizontal wellbore and place the device 14 further along the wellbore.

Sonic stimulation tools, pressure wave tools or heating tools may be incorporated in the devices 14 ands/or 30.

## Claims

1. A method of increasing production of hydrocarbons from a reservoir (4) penetrated by a wellbore (6) which includes an associated artificial lift means (10), the method comprising:
A.
(i) inserting a conduit (12) having an outlet into the wellbore (6);
(ii) introducing treatment fluid into the wellbore (6) via the outlet of the conduit (12) as the conduit is moved into the wellbore, said treatment fluid being arranged to mobilise hydrocarbons;
or
B.
(a) operating said artificial lift means (10) to withdraw fluid from the wellbore (6) and cause it to move to the production well (8);
(b) when said artificial lift means (10) is operating, continuously introducing treatment fluid into the wellbore (6) via a conduit (12) having an outlet, said conduit extending from a production well along the wellbore, wherein said treatment fluid is arranged to mobilise said hydrocarbons;
wherein, for both methods A and B, after insertion of the conduit (12), the outlet is positioned at a distance of at least 25m from the artificial lift means (10).

2. A method according to claim 1 or claim 2, wherein in method A said treatment fluid is injected from said conduit (12) continuously as it is moved through a distance of at least 25m along the wellbore (6); or wherein in method A treatment fluid is flowing from the outlet of the conduit (12) substantially during the entire passage of the conduit down the production well (8) of the wellbore.

3. A method according to any preceding claim, wherein the time from the start of insertion of the conduit (12) into the wellbore in method A until it reaches its final stationary position is more than two hours; or after reaching a stationary position, treatment fluid is introduced into the wellbore (6) over a period of at least 10 days..

4. A method according to any preceding claim, wherein when said conduit (12) is in a stationary position in the wellbore (6), the rate of introduction of treatment fluid into the wellbore is at least 1 m³/day and less than 200m³/day; or wherein the total volume of treatment fluid introduced into the wellbore is at least 250m³.

5. A method according to any preceding claim, wherein said treatment fluid has a viscosity at 25°C and 100s⁻¹ of greater than 0.98cP and not greater than 10cP.

6. A method according to any preceding claim, wherein said treatment fluid comprises a first polymeric material which includes -O- moieties pendent from a polymeric backbone.

7. A method according to claim 6, wherein said first polymeric material includes a moiety

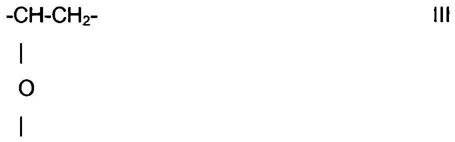

8. A method according to claim 7, wherein said first polymeric material includes a plurality of functional groups selected from hydroxyl and acetate groups.

9. A method according to any of claims 6 to 8, wherein said first polymeric material includes a multiplicity of hydroxyl groups pendant from a polymeric backbone; and also includes a multiplicity of acetate groups pendant from the polymeric backbone.

10. A method according to any of claims 6 to 9, wherein said first polymeric material includes a vinyl alcohol moiety.

11. A method according to any of claims 6 to 10, wherein said first polymeric material comprises a 5 to 95% hydrolysed polyvinyl acetate.

12. A method according to any of claims 6 to 11, wherein the weight average molecular weight of said polymeric material (Mw) is in the range 5000 to 25000.

13. A method according to any of claims 6 to 12, wherein said first polymeric material comprises a 60 to 99% hydrolysed polyvinylacetate.

14. A method according to any of claims 6 to 13, wherein said treatment fluid includes 95 to 99wt% of water, 0.1 to 1wt% of said first polymeric material and 0 to 3wt% of other additives.

15. An assembly for use in the method of any preceding claim, comprising:
(A) a conduit (12) having an outlet for treatment fluid, said conduit extending from a surface into a wellbore (6) and being arranged to deliver treatment fluid into the wellbore;
(B) an artificial lift means (10) associated with the wellbore (6) for facilitating removal of fluid from the wellbore;
(C) a receptacle at the surface, said receptacle containing treatment fluid;
(D) treatment fluid flowing within the conduit (12);
wherein the outlet of the conduit (12) is positioned at a distance of at least 25m from the artificial lift means (10)..

## Patentansprüche

1. Verfahren zum Erhöhen der Kohlenwasserstoffproduktion aus einem Behälter (4), der von einem Bohrloch (6) durchdrungen ist, das ein zugehöriges Fördermittel (10) aufweist, wobei das Verfahren Folgendes umfasst:
A.
(i) Einführen einer Leitung (12), die einen Auslass aufweist, in das Bohrloch (6);
(ii) Einleiten von Behandlungsfluid in das Bohrloch (6) durch den Auslass der Leitung (12), während die Leitung in das Bohrloch bewegt wird, wobei das Behandlungsfluid zum Mobilisieren von Kohlenwasserstoffen geeignet ist;
oder
B.
(a) Betätigen des Fördermittels (10), um Fluid aus dem Bohrloch (6) zu entnehmen und zu bewirken, dass es sich zu der Produktionsbohrung (8) bewegt;
(b) wenn das Fördermittel (10) betätigt wird, kontinuierliches Einleiten von Behandlungsfluid in das Bohrloch (6) über eine Leitung (12), die einen Auslass aufweist, wobei sich die Leitung von einer Produktionsbohrung entlang des Bohrlochs erstreckt, wobei das Behandlungsfluid zum Mobilisieren der Kohlenwasserstoffe geeignet ist;
wobei für beide Verfahren A und B nach Einführen der Leitung (12) der Auslass in einem Abstand von mindestens 25 m von dem Fördermittel (10) angeordnet ist.

2. Verfahren nach Anspruch 1, wobei in Verfahren A das Behandlungsfluid aus der Leitung (12) kontinuierlich eingespritzt wird, während es über einen Abstand von mindestens 25 m entlang des Bohrlochs (6) bewegt wird; oder wobei in Verfahren A Behandlungsfluid aus dem Auslass der Leitung (12) im Wesentlichen entlang der gesamten Länge der Leitu n g die Produktionsbohrung (8) des Bohrlochs nach unten fließt.

3. Verfahren nach einem der vorhergehenden Ansprüche, wobei die Zeit ab Beginn des Einführens der Leitung (12) in das Bohrloch in Verfahren A bis Erreichen ihrer ortsfesten Endposition mehr als zwei Stunden beträgt; oder nach Erreichen einer ortsfesten Position über einen Zeitraum von mindestens 10 Tagen Behandlungsfluid in das Bohrloch (6) eingeleitet wird.

4. Verfahren nach einem der vorhergehenden Ansprüche, wobei, wenn sich die Leitung (12) in einer ortsfesten Position in dem Bohrloch (6) befindet, die Einleitungsrate des Behandlungsfluids in das Bohrloch mindestens 1 m³/Tag und weniger als 200 m³/Tag beträgt; oder wobei das Gesamtvolumen von Behandlungsfluid, das in das Bohrloch eingeleitet wird, mindestens 250 m³ beträgt.

5. Verfahren nach einem der vorhergehenden Ansprüche, wobei das Behandlungsfluid bei 25 °C und 100 s⁻¹ eine Viskosität von mehr als 0,98 cP und nicht mehr als 10 cP aufweist.

6. Verfahren nach einem der vorhergehenden Ansprüche, wobei das Behandlungsfluid ein erstes Polymermaterial umfasst, das -O-Einheiten aufweist, die von einem Polymergrundgerüst anhängig sind.

7. Verfahren nach Anspruch 6, wobei das erste Polymermaterial die folgende Einheit aufweist

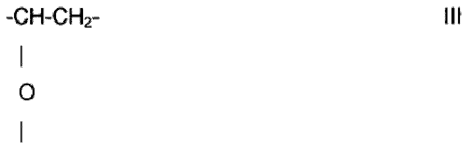

8. Verfahren nach Anspruch 7, wobei das erste Polymermaterial mehrere funktionelle Gruppen aufweist, die ausgewählt sind aus Hydroxyl- und Acetatgruppen.

9. Verfahren nach einem der Ansprüche 6 bis 8, wobei das erste Polymermaterial eine Vielzahl von Hydroxylgrupp e n auf weist, die von einem Polymergrundgerüst anhängig sind; und auch eine Vielzahl von Acetatgruppen aufweist, die von dem Polymergrundgerüst anhängig sind.

10. Verfahren nach einem der Ansprüche 6 bis 9, wobei das erste Polymermaterial eine Vinylalkoholeinheit aufweist.

11. Verfahren nach einem der Ansprüche 6 bis 10, wobei das erste Polymermaterial ein zu 5 bis 95 % hydrolysiertes Polyvinylacetat aufweist.

12. Verfahren nach einem der Ansprüche 6 bis 11, wobei das durchschnittliche Molekulargewicht (Gewichtsmittel) des Polymermaterials (MG) im Bereich von 5.000 bis 25.000 liegt.

13. Verfahren nach einem der Ansprüche 6 bis 12, wobei das erste Polymermaterial ein zu 60 bis 99 % hydrolysiertes Polyvinylacetat aufweist.

14. Verfahren nach einem der Ansprüche 6 bis 13, wobei das Behandlungsfluid zu 95 bis 99 Gew.-% Wasser, zu 0,1 bis 1 Gew.-% das erste Polymermaterial und zu 0 bis 3 Gew.-% andere Zusatzstoffe enthält.

15. Anordnung zur Verwendung in dem Verfahren nach einem der vorhergehenden Ansprüche, umfassend:
A) eine Leitung (12) mit einem Auslass für Behandlungsfluid, wobei sich die Leitung von einer Oberfläche in ein Bohrloch (6) erstreckt udn zum Abgeben von Behandlungsflüssigkeit in das Bohrloch geeignet ist;
(B) ein Fördermittel (10), das mit dem Bohrloch (6) verbunden ist, um die Entnahme von Fluid aus dem Bohrloch zu ermöglichen;
(c) einen Aufnahmebehälter an der Oberfläche, wobei der Aufnahmebehälter Behandlungsfluid enthält;
(D) Behandlungsfluid, das in der Leitung (12) fließt;
wobei der Auslass der Leitung (12) in einem Abstand von mindestens 25 m von dem Fördermittel (10) angeordnet ist.

## Revendications

1. Procédé pour augmenter la production d'hydrocarbures à partir d'un réservoir (4) pénétré par un puits de forage (6) qui comprend un moyen de levage artificiel associé (10), le procédé comprenant :
A.
(i) l'insertion d'un conduit (12) ayant une sortie dans le puits de forage (6) ;
(ii) l'introduction d'un fluide de traitement dans le puits de forage (6) par la sortie du conduit (12) lorsque le conduit est déplacé dans le puits de forage, ledit fluide de traitement étant disposé pour mettre des hydrocarbures en mouvement ;
ou
B.
(a) le fonctionnement dudit moyen de levage artificiel (10) pour retirer un fluide du puits de forage (6) et l'amener à se déplacer jusqu'au puits de production (8) ;
(b) pendant le fonctionnement dudit moyen de levage artificiel (10), l'introduction continue d'un fluide de traitement dans le puits de forage (6) par un conduit (12) ayant une sortie, ledit conduit s'étendant depuis un puits de production le long du puits de forage, ledit fluide de traitement étant disposé pour mettre lesdits hydrocarbures en mouvement ;
dans lequel, pour les deux procédés A et B, après insertion du conduit (12), la sortie est positionnée à une distance d'au moins 25 m du moyen de levage artificiel (10).

2. Procédé selon la revendication 1 dans lequel, dans le procédé A, ledit fluide de traitement est injecté depuis ledit conduit (12) de façon continue lorsqu'il est déplacé sur une distance d'au moins 25 m le long du puits de forage (6) ; ou dans lequel, dans le procédé A, le fluide de traitement s'écoule depuis la sortie du conduit (12) essentiellement pendant le passage entier du conduit jusqu'au puits de production (8) du puits de forage.

3. Procédé selon l'une quelconque des revendications précédentes, dans lequel le temps depuis le début d'insertion du conduit (12) dans le puits de forage dans le procédé A jusqu'à ce qu'il atteigne sa position stationnaire finale est supérieur à deux heures ; ou après avoir atteint une position stationnaire, le fluide de traitement est introduit dans le puits de forage (6) sur une période d'au moins 10 jours.

4. Procédé selon l'une quelconque des revendications précédentes dans lequel, quand ledit conduit (12) se trouve dans une position stationnaire dans le puits de forage (6), la vitesse d'introduction de fluide de traitement dans le puits de forage est d'au moins 1 m³/jour et de moins de 200 m³/jour ; ou dans lequel le volume total de fluide de traitement introduit dans le puits de forage est d'au moins 250 m³.

5. Procédé selon l'une quelconque des revendications précédentes, dans lequel ledit fluide de traitement a une viscosité à 25 °C et 100 s⁻¹ supérieure à 0,98 cP et inférieure ou égale à 10 cP.

6. Procédé selon l'une quelconque des revendications précédentes, dans lequel ledit fluide de traitement comprend un premier matériau polymère qui comporte des fractions -O- rattachées à un squelette polymère.

7. Procédé selon la revendication 6, dans lequel ledit premier matériau polymère comporte une fraction

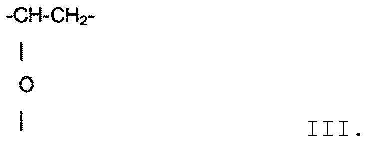

8. Procédé selon la revendication 7, dans lequel ledit premier matériau polymère comporte une pluralité de groupes fonctionnels choisis parmi les groupes hydroxyle et acétate.

9. Procédé selon l'une quelconque des revendications 6 à 8, dans lequel ledit premier matériau polymère comporte une multiplicité de groupes hydroxyle rattachés à un squelette polymère, et comporte également une multiplicité de groupes acétate rattachés au squelette polymère.

10. Procédé selon l'une quelconque des revendications 6 à 9, dans lequel ledit premier matériau polymère comporte une fraction alcool vinylique.

11. Procédé selon l'une quelconque des revendications 6 à 10, dans lequel ledit premier matériau polymère comprend un polyacétate de vinyle hydrolysé à 5 à 95 %.

12. Procédé selon l'une quelconque des revendications 6 à 11, dans lequel le poids moléculaire moyen en poids dudit matériau polymère (Mw) se situe dans la gamme de 5000 à 25 000.

13. Procédé selon l'une quelconque des revendications 6 à 12, dans lequel ledit premier matériau polymère comprend un polyacétate de vinyle hydrolysé à 60 à 99 %.

14. Procédé selon l'une quelconque des revendications 6 à 13, dans lequel ledit fluide de traitement comprend 95 à 99 % en poids d'eau, 0,1 à 1 % en poids dudit premier matériau polymère et 0 à 3 % en poids d'autres additifs.

15. Ensemble à utiliser dans le procédé de l'une quelconque des revendications précédentes, comprenant :
(A) un conduit (12) ayant une sortie pour fluide de traitement, ledit conduit s'étendant depuis une surface à l'intérieur d'un puits de forage (6) et étant disposé pour délivrer un fluide de traitement dans le puits de forage ;
(B) un moyen de levage artificiel (10) associé au puits de forage (6) pour faciliter le retrait de fluide du puits de forage ;
(C) un récipient à la surface, ledit récipient contenant un fluide de traitement ;
(D) un fluide de traitement s'écoulant à l'intérieur de conduit (12) ;
dans lequel la sortie du conduit (12) est positionnée à une distance d'au moins 25 m du moyen de levage artificiel (10).
